# EUROPEAN PATENT SPECIFICATION

(11) **EP 1 378 395 B1**
(45) Date of publication and mention of the grant of the patent: **17.05.2006**
(21) Application number: 02021045.6
(22) Date of filing: 20.09.2002
(51) Int. Cl.: B60R 1/00

(54) **A monitoring system for monitoring a dead zone related to a front pillar of a vehicle**
Sichtsystem für ein Fahrzeug zur Beseitigung der Sichtverdeckung durch die A-Säule
Dispositif de surveillance de l'angle mort causé par le montant frontal d'un véhicule

(30) Priority: 02.07.2002 KR 2002037858
(43) Date of publication of application: 07.01.2004
(73) Proprietor: Kia Motors Co., Ltd., Kwang Myung-shi, Gyeonggi-do (KR)
(72) Inventor: Hong, Jong-Myeon, Guro-gu, Seoul (KR)
(74) Representative: Viering, Jentschura & Partner

(56) References cited:
- EP-A- 1 024 057
- EP-A- 1 285 814
- DE-A- 3 900 667
- DE-A- 10 037 129

## Description

### BACKGROUND OF THE INVENTION

### 1. Field of the Invention

The present invention relates to a monitoring system for monitoring a dead zone of a vehicle according to the preamble of claim 1. Such a monitoring system according to the preamble of claim 1 is known from earlier document EP 1 285 814 A1. More specifically, the invention relates to monitoring system of a vehicle for monitoring the dead zone related to a front pillar to improve a driving view.

### 2. Detailed Description of the Related Art

Generally, a vehicle such as an automobile includes a body forming an outer appearance of the vehicle, an engine disposed in the body for generating a power, and a chassis for transmitting the power to a number of power devices and for operating a number of driving devices. The body comprises a floor panel forming a bottom of the vehicle, a frame for reinforcing strength of the body, a plurality of the pillar forming side portion of the body, a roof panel formed on the body, and a plurality of doors.

In driving the vehicle, a driver usually gets a front view field through a front window of the vehicle, a rear view field through a room mirror and a side-rear view field through a plurality of side mirrors. Furthermore, the driver can get a side view field through door windows of the vehicle.

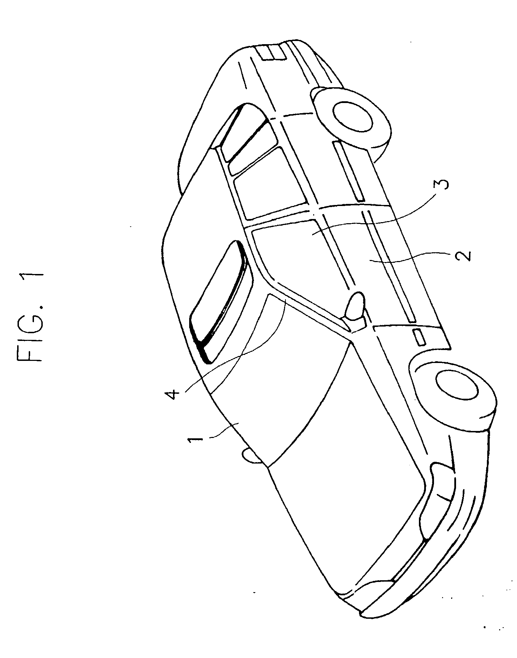

However, a front pillar of the vehicle can obstruct the front view field or side-front view field of the driver as shown in FIG. 1.

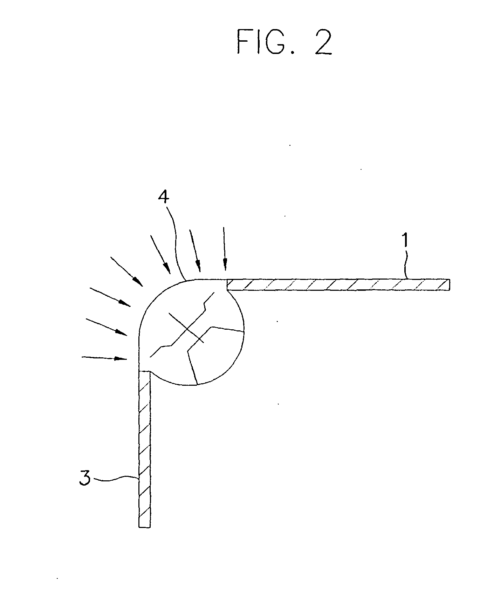

FIG. 1 is a schematic perspective view of a front pillar of the conventional vehicle. FIG. 2 is a partial sectional view of a dead zone caused by the front pillar as shown in FIG. 1.

Referring to FIGS. 1 to 2, the front pillar 4 of the vehicle, so called an A-pillar, obstructs the front view field of the driver since the front pillar is disposed between the front window 1 and a front door window 3. That is, the front pillar 4 can diagonally shut off the driver's eyes along front-cornered lines, and more particularly, when the vehicle gets turned to the left, the front pillar 4 inevitably makes a dead zone along a moving direction of the vehicle. Therefore, the driver cannot do careful driving to say nothing of feeling oppressed for shutting off the view field.

However, the traffic regulations limit a range of an obstructing angle corresponding to a width of the front pillar for the protection of passengers in overturning. In addition, the current trend of emphasizing passenger's safety renders a width, a thickness and a position of the front pillar be more important element of the vehicle. Namely, the front pillar of the vehicle obstructs the view field of the driver, and simultaneously enhances passenger's safety in driving. Therefore, the front pillar requires to be manufactured in such a structure that the front view field and the passenger safety in overturning are simultaneously satisfied.

Disclosed is a plurality of supplementary mirror adhered or installed on the vehicle for removing or reducing the dead zone related to the front pillar of the vehicle. However, the supplementary mirror comprising a convex mirror not only makes a sense of distance dull and blunt for the convexity, but also spoils an appearance of the vehicle, which endangers vehicle security on the contrary to our expectation. Furthermore, the driver gets confused at image information on the supplementary mirror since the supplementary mirror gives information on the dead zone with being installed off from the dead zone.

Consequently, a range or magnitude of a dead angle requires to be accurately measured so as to remove the dead zone actually caused by the front pillar, to avoid being confused at image information, and to improve the front view

DE 100 37 129 A1 discloses an assisting device for parking and/or shunting for a passenger car or for a heavy goods vehicle which device comprises an image receiving unit, an image display unit, and a control apparatus for receiving and/or processing of the images.

EP 1 024 057 A2 discloses a display apparatus on a vehicle, which comprises image sensing means for sensing an image ahead of the vehicle using infrared rays, a display means for displaying an infrared image sensed by said image sensing means at a position in front of a driver's seat in a passenger room of the vehicle, and surrounding environment means for detecting a surrounding environment of the vehicle, and a display control means for controlling said display means on the basis of a detection result of said surrounding environment means.

### SUMMARY OF THE INVENTION

It is an object of the invention to provide a dead zone monitoring system capable of completely monitoring the dead zone caused by a front pillar of a vehicle for increasing passenger safety. To this end, the present invention provides a dead zone monitoring system comprising the features disclosed in independent claim 1. A preferred embodiment is described in the dependent claim 2.

According to the present invention, the dead zone caused by the front pillar of the vehicle is completely monitored to be capable of doing a careful driving, and simultaneously enhancing the passenger safety in overturning of the vehicle.

### BRIEF DESCRIPTION OF THE DRAWINGS

The above and other objects and advantages of the present invention will become readily apparent by reference to the following detailed description when considered in conjunction with the accompanying drawings wherein:
FIG. 1 is a schematic perspective view of a front pillar of the conventional vehicle;
FIG. 2 is a partial sectional view of a dead zone caused by the front pillar as shown in FIG. 1;
FIG. 3 is a structural view showing a dead zone monitoring system according to a first embodiment of the present invention;
FIG. 4A is a front view showing a guide in which a camera of the monitoring system as shown in FIG. 3 is installed;
FIG. 4B is a front view showing a up-down regulating device on which a display device is installed.

### DETAILED DESCRIPTION OF THE PREFERRED EMBODIMENT

Hereinafter, the present invention will be described in detail with reference to the accompanying drawings.

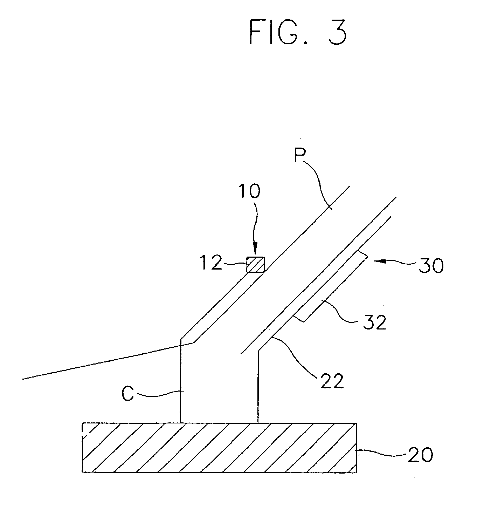

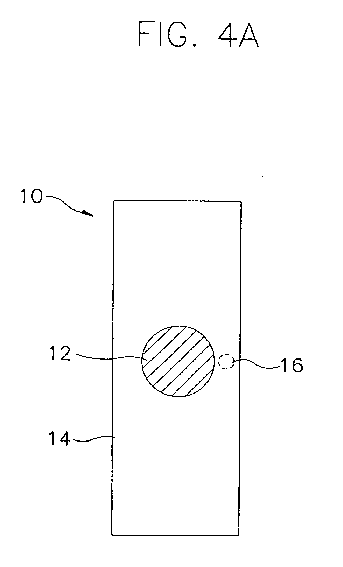

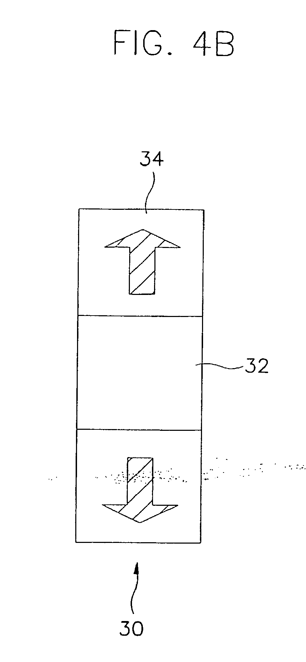

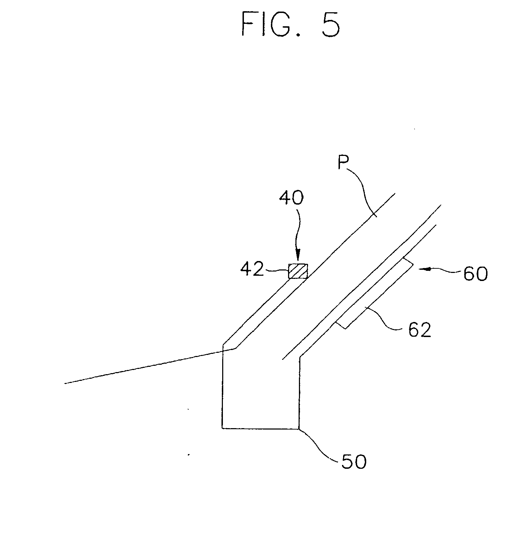

Referring to FIGS. 3, 4A, and 4B, a first embodiment of the dead zone monitoring system for monitoring the dead zone caused by a front pillar P of a vehicle includes a photographing device 10, which is disposed outside the front pillar P for photographing driving conditions along front view or side-front view. The photographing device 10 includes a camera 12, and preferably the camera is a subminiature camera. Particularly, the camera 12 is moveably installed to a guide 14 for adjusting a height and a position thereof.

The photographing device 10 is connected with an image controller 20 by using a cable 12. The image controller 20 can analyze, transform and process the information image that is photographed by the photographing device and actually shown on a display device successively described.

An image controller is connected with a display device 30 by using an imaginary signal cable 22. Though a great variety of the display device 30 is known, a monitor 32 is more proper to the display device 30. Particularly, a liquid crystal display device is more preferable to the display device 30. Preferably, the monitor 32 includes an up-down regulator 34 for regulating a position thereof according to a driver's height or an altitude of a driver's seat. Therefore, the monitor can be installed to a position suitable for respective driver, so that the driver can monitor the dead zone caused by the front pillar with comfort and stability.

The photographing device 10 can selectively includes a distance sensor 16. The distance sensor 16 can detect an obstacle in the dead zone and give warning signal and imagine information on the obstacle to the driver not to mention monitoring of the dead zone caused by the front pillar P.

The dead zone monitoring system according to an embodiment of the present invention is operated as follows.

At first, the photographing device 10 is installed outside the front pillar P, and a cable C, the image controller 20, and the display device 30 are installed inside the front pillar P. The display device 30 is connected with the photographing device 10 by using the imaginary signal cable 22.

The photographing device 10 photographs image information through the camera 12, and the image controller 20 analyzes, transforms, and processes the image information. At last, the image information is displayed on the monitor 32 of the display device 30 through the imaginary signal cable 22. Accordingly, the driver can observe the dead zone caused by the front pillar P of the vehicle by using the monitor 32 to thereby carefully and safely drive. At that time, the display device and the lens can be regulated to have a proper height suitable for respective drivers of diverse physical conditions.

When the distance sensor 16 is selectively installed to the photographing device 10, the distance sensor 16 can detect an obstacle in the dead zone and give warning signal and imagine information on the obstacle to the driver not to mention monitoring of the dead zone caused by the front pillar P.

Furthermore, when the photographing device 40 disposed outside the front pillar P for photographing driving conditions along front view or side-front view includes the optical lens 42, the photographing device 40 is operated as the same way as described in the above passage. As a result, the image information is displayed on the optical monitor 62 of the display device 60 through the optical cable 50.

According to a preferred embodiment of the present invention, the dead zone monitoring system can completely monitor the dead zone caused by the front pillar of the vehicle and display an image information on the dead zone just in front of the driver's eyes, so that the driving view field is fully improved and security of driving is enhanced. Furthermore, the front pillar can be free from size restriction since the dead zone caused by the front pillar is removed by the monitoring system regardless of the front pillar size. Therefore, the front pillar can be formed to have a sufficient strength with escaping from the size restriction, so that security of the vehicle can be enhanced and the front pillar can be formed to give an aesthetic impression in the sense of sight.

Although the present invention has been described in detail above, various changes, substitutions and alterations can be made thereto without departing from the true spirit and scope of the invention as defined by the appended claims.

## Claims

1. A dead zone monitoring system for monitoring the dead zone of a vehicle comprising:
a photographing device (10) disposed on the front pillar (P) for photographing a dead zone of a driver caused by the front pillar (P) of the vehicle;
an image controller (20) connected with the photographing device (10) for analyzing, transforming and processing an information image that is photographed by the photographing device (10); and
a display device (30) connected with the image controller (20) by using a imaginary signal cable (22) for displaying the information image provided from the image controller (20), wherein the display device (30) includes a monitor (32),
**characterized in that**
the display device (30) includes a regulator for regulating a position of the monitor according to a driver's height or an altitude of a driver's seat.

2. The dead zone monitoring system according to claim 1, wherein the photographing device (10) includes a distance sensor (16), the distance sensor (16) detecting an obstacle in the dead zone and warning the driver of existence of the obstacle.

## Patentansprüche

1. Totzonen-Überwachungssystem zum Überwachen der Totzone eines Fahrzeugs, aufweisend:
eine Bildaufnahmeeinrichtung (10), die an der Frontsäule (P) angeordnet ist zum Aufnehmen einer Totzone eines Fahrers, die von der Frontsäule (P) des Fahrzeugs verursacht wird,
einen Bildcontroller (20), der mit der Bildaufnahmeeinrichtung (10) verbunden ist, zum Analysieren, Umwandeln und Verarbeiten einer Bildinformation, die von der Bildaufnahmeeinrichtung (10) aufgenommen wurde, und
eine Anzeigeeinrichtung (30), die unter Verwendung eines Bildsignalkabels (22) mit dem Bildcontroller (20) verbunden ist, zum Anzeigen der von dem Bildcontroller (20) bereitgestellten Bildinformation, wobei die Anzeigeeinrichtung (30) einen Monitor (32) aufweist,
**dadurch gekennzeichnet, dass** die Anzeigeeinrichtung (30) eine Stelleinrichtung aufweist zum Anpassen einer Position des Monitors gemäß einer Fahrergröße oder einer Höhe eines Fahrersitzes.

2. Totzonen-Überwachungssystem gemäß Anspruch 1, wobei die Bildaufnahmeeinrichtung (10) einen Abstandssensor (16) aufweist, wobei der Abstandssensor (16) ein Hindernis in der Totzone erfasst und den Fahrer hinsichtlich des Vorhandenseins des Hindernisses allarmiert.

## Revendications

1. Un système de surveillance d'angle mort pour surveiller l'ange mort (cachant la visibilité) d'un véhicule, comprenant :
- un dispositif photographique (10) disposé sur le montant avant (P) pour photographier l'angle mort pour un conducteur provoqué par le montant avant (P) du véhicule ;
- un contrôleur d'image (20) relié au dispositif photographique (10) pour analyser, transformer et traiter une image d'information qui est photographiée par le dispositif photographique (10) ; et
- un dispositif d'affichage (30) relié au contrôleur d'image (20) en utilisant un câble (22) de signal imaginaire pour afficher l'image d'information fournie par le contrôleur d'image (20), le dispositif d'affichage (30) comportant un écran de contrôle (32),
**caractérisé en ce que**
le dispositif d'affichage (30) comporte un régulateur pour réguler la position de l'écran de contrôle en correspondance à la hauteur d'un conducteur ou à celle d'un siège de conducteur.

2. Le système de surveillance d'angle mort selon la revendication 1, dans lequel le dispositif photographique (10) comporte un capteur de distance (16), ce capteur de distance (16) détectant un obstacle situé dans l'angle mort et avertissant le conducteur de l'existence de l'obstacle.
